(19) Europäisches Patentamt / European Patent Office / Office européen des brevets

(11) EP 4 693 161 A1

(12) **EUROPEAN PATENT APPLICATION**

(43) Date of publication:
   11.02.2026 Bulletin 2026/07

(21) Application number: 25190943.8

(22) Date of filing: 22.07.2025

(51) International Patent Classification (IPC):
   $G06Q\ 50/20^{(2012.01)}$    $G09B\ 5/04^{(2006.01)}$
   $G09B\ 5/06^{(2006.01)}$    $G09B\ 7/00^{(2006.01)}$
   $G09B\ 7/04^{(2006.01)}$

(52) Cooperative Patent Classification (CPC):
   G09B 5/065; G06Q 50/20; G09B 5/04; G09B 7/00;
   G09B 7/04

(84) Designated Contracting States:
   AL AT BE BG CH CY CZ DE DK EE ES FI FR GB
   GR HR HU IE IS IT LI LT LU LV MC ME MK MT NL
   NO PL PT RO RS SE SI SK SM TR
   Designated Extension States:
   BA
   Designated Validation States:
   GE KH LA MA MD TN

(30) Priority: 05.08.2024 JP 2024129237

(71) Applicant: Casio Computer Co., Ltd.
   Tokyo 151-8543 (JP)

(72) Inventor: Azuma, Yunosuke
   Hamura-shi, Tokyo 205-8555 (JP)

(74) Representative: Grünecker Patent- und
   Rechtsanwälte
   PartG mbB
   Leopoldstraße 4
   80802 München (DE)

(54) **INFORMATION PROCESSING DEVICE, INFORMATION PROCESSING METHOD, INFORMATION PROCESSING SYSTEM, AND PROGRAM**

(57) An information processing device (10) includes a processor (11) that executes first processing of deriving a predicted correct answer probability being a probability that a learner is predicted to correctly answer a first question, and deriving a time difference between a timing for displaying the first question and a timing for displaying hint information being information as a hint of the first question, based on the predicted correct answer probability, or second processing of acquiring a degree of difficulty of the first question answered by the learner, and deriving a time difference between a timing for displaying the first question and a timing for displaying the hint information, based on the degree of difficulty, and generates data for displaying the first question and the hint information for the learner, based on the time difference.

*FIG.2*

**Description**

The present disclosure relates to an information processing device, an information processing method, an information processing system, and a program.

In recent years, there is a learning assistance system in which a question is set for a learner by using a computer, and the learner performs an exercise by answering the set question. Herein, in a case where the learner actually performs the exercise, the learner may give an answer while viewing a support teaching material such as a hint and an explanation. For example, Japanese Patent No. 7022431 discloses a learning assistance system in which a server communicably connected to an information processing terminal outputs a hint in response to a learner performing an input that requests the information processing terminal to present the hint.

An information processing device (10) according to the present disclosure includes a processor (11) that executes first processing of deriving a predicted correct answer probability being a probability that a learner is predicted to correctly answer a first question, and deriving a time difference between a timing for displaying the first question and a timing for displaying hint information being information as a hint of the first question, based on the predicted correct answer probability, or second processing of acquiring a degree of difficulty of the first question answered by the learner, and deriving a time difference between a timing for displaying the first question and a timing for displaying the hint information, based on the degree of difficulty, and generates data for displaying the first question and the hint information for the learner, based on the time difference.

A more complete understanding of this application can be obtained in a case where the following detailed description is considered in conjunction with the following drawings, in which:

FIG. 1 is a diagram illustrating an overview of an overall configuration of an information processing system according to an embodiment of the present disclosure;

FIG. 2 is a block diagram illustrating a functional configuration of a server according to the embodiment of the present disclosure;

FIG. 3 is a block diagram illustrating a functional configuration of a learner terminal according to the embodiment of the present disclosure;

FIG. 4 is a diagram illustrating one example of answer history information according to the embodiment of the present disclosure;

FIG. 5 is a flowchart of one example of hint presentation processing according to the embodiment of the present disclosure;

FIG. 6 is a flowchart of another example of hint presentation processing according to the embodiment of the present disclosure;

FIG. 7 is a diagram illustrating one example of a table of threshold value conditions according to the embodiment of the present disclosure;

FIG. 8 is a diagram illustrating one example of a question and a hint according to the embodiment of the present disclosure;

FIG. 9A is a diagram illustrating a relationship between an ability value and a degree of difficulty, and a correct answer probability in a case where the degree of difficulty is high; and

FIG. 9B is a diagram illustrating a relationship between an ability value and a degree of difficulty, and a correct answer probability in a case where the degree of difficulty is low; and

FIG. 10 is a diagram illustrating a threshold value condition of a difference between the ability value and the degree of difficulty.

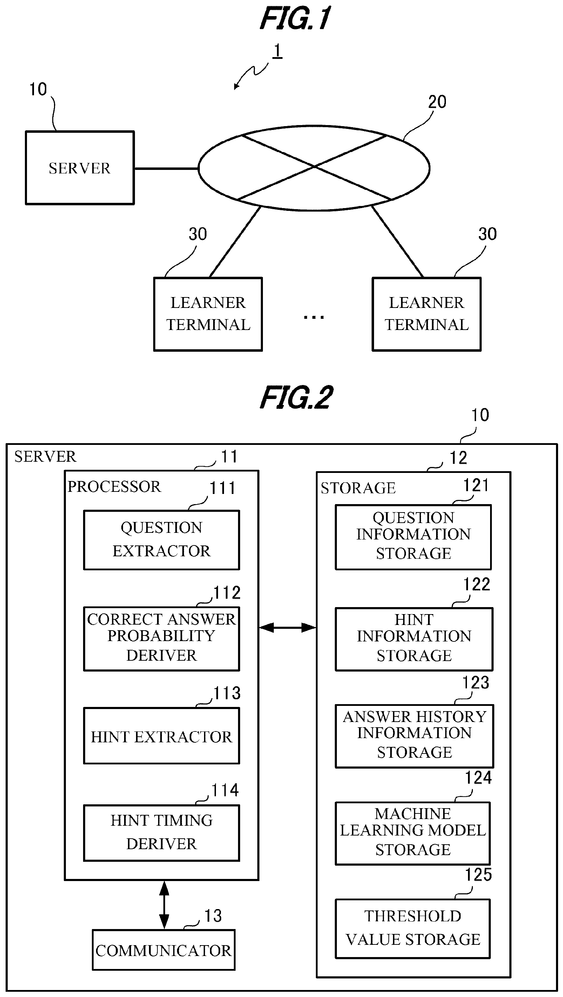

An information processing system according to an embodiment of the present disclosure provides a learner with a service that performs learning assistance. As illustrated in FIG. 1, the information processing system 1 includes a server 10 (information processing device), and a learner terminal 30 communicated with and connected to the server 10 via a network 20 such as the Internet. A plurality of the learner terminals 30 is connected according to the number of learners. The learner terminal 30 is a terminal device such as, for example, a smartphone, a tablet terminal, and a personal computer used by the learner. The server 10 presents a question and a hint to the learner who operates the learner terminal 30, also scores an answer sent through the learner terminal 30, and presents a score result to the learner.

As illustrated in FIG. 2, the server 10 includes a processor 11, a storage 12, and a communicator 13. The processor 11 is constituted from, for example, at least one central processing unit (CPU) and the like, and executes various types of processing by a program stored in the storage 12. The storage 12 includes, for example, a random access memory (RAM), a read only memory (ROM), and the like as at least one memory. The communicator 13 includes a communication module such as a LAN, and performs data communication with the learner terminal 30 via the network 20.

In FIG. 2, the processor 11 executes the program stored in the storage 12, and thus functions as a question extractor 111, a correct answer probability deriver 112, a hint extractor 113, and a hint timing deriver 114.

The question extractor 111 extracts a question set for the learner. The storage 12 includes a question information storage 121 that stores question information being information about a plurality of questions set for the learner and an answer to the questions. The question stored in the question information storage 121 is a proof question of, for example, mathematics and the like. However, the question is not limited to this, and may be a calculation question and may be a question of another subject such as English. The question extractor 111 searches the question information storage 121 and extracts a desired question. The extracted question is transmitted from the communicator 13 to the learner terminal 30 via the network 20. The desired question is requested from the server 10 by the learner performing an input to the learner terminal 30. Note that the desired question is not limited to designation of the learner, and may be determined by the question extractor 111. For example, the question extractor 111 may randomly extract an unset question, and, even in a case of a question that has already been set, the question extractor 111 may extract the question incorrectly answered last time and the question with a lapse of a time since the question has been set last time. Further, the question extractor 111 may extract a set question according to a degree of difficulty of the question and an ability value of the learner.

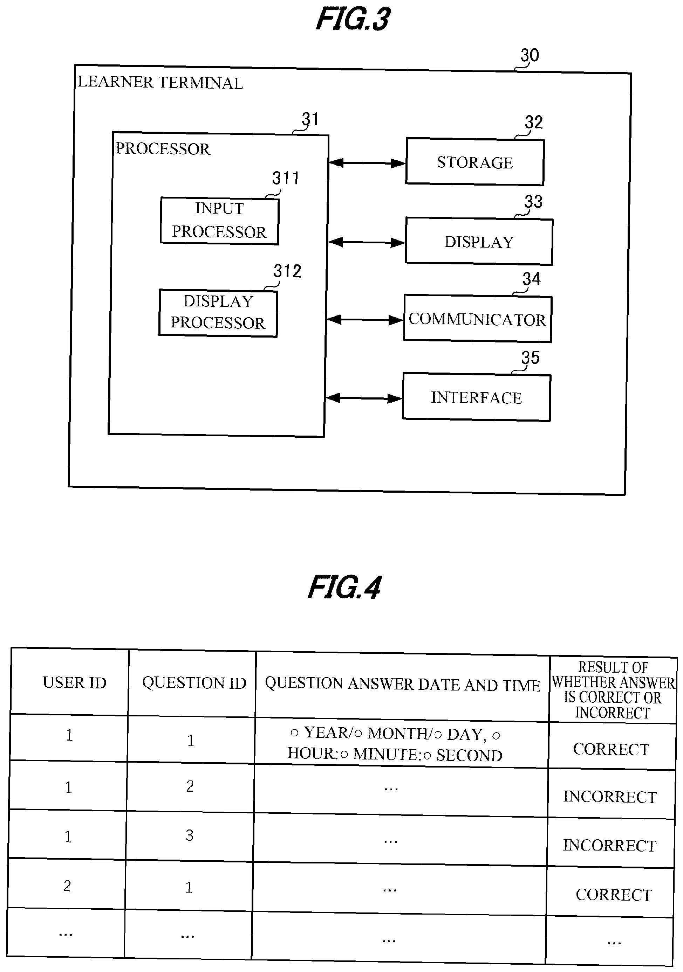

The correct answer probability deriver 112 derives a predicted correct answer probability being a probability that the learner is predicted to correctly answer a question (first question) set this time by estimation by machine learning, based on an answer history of the learner of another question other than the question set for the learner this time. Specifically, in response to a certain learner A grappling with a question j, a machine learning model that estimates a correct answer probability is used, and a predicted value of a probability that the learner A correctly answers the question j is estimated. In addition to an item response theory (IRT), a derivative model of the IRT and a knowledge tracing model can be applied as the machine learning model. The storage 12 includes an answer history information storage 123 and a machine learning model storage 124. Answer history information about each learner with respect to each set question is stored in the answer history information storage 123. FIG. 4 illustrates one example of a table of the answer history information. A user ID of each learner, an ID of the set question, a date and time at which the question is answered, and a result of determination of whether the answer is correct or incorrect are stored in the table, and the table is updated each time the answer is given or for each certain time. The machine learning model that sets data about the answer history of the learner as an input, and derives a predicted correct answer probability, based on the answer history data, is stored in the machine learning model storage 124. Herein, an estimation method is described by taking, as an example, a 1 parameter logistic (1PL) model of the IRT. In the 1PL model of the IRT, a predicted correct answer probability of the question j with respect to an ability value $\theta$ of the learner is approximated by the following sigmoid function.

[Math 1]

$$P_j(\theta) = \frac{1}{1+\exp(-(\theta - b_j))} \qquad \text{Equation (1)}$$

Herein, a parameter bj represents a degree of difficulty of the question j.

The correct answer probability of the certain learner A with respect to the certain question j is predicted by modeling Pj($\theta$) as described above.

The correct answer probability deriver 112 calculates a model parameter in such a way as to satisfy Equation (1), based on the answer history of the learner stored in the answer history information storage 123. The ability value and the degree of difficulty are included in the model parameter. The correct answer probability deriver 112 obtains, from answer histories of many learners, the ability value $\theta$ of the learner and the degree of difficulty bj that satisfy Equation (1). Estimation is performed by using a statistical technique such as, for example, an EM algorithm and a Bayesian inference method.

The hint extractor 113 extracts hint information helpful for the learner A to answer a question set for the learner A, and presents the hint information to the learner A. The storage 12 includes a hint information storage 122 that stores the hint information being a hint of a question. The hint extractor 113 searches the hint information storage 122 and extracts desired hint information. A plurality of pieces of the hint information is prepared for each question, and each piece of the hint information has a content of levels of a plurality of stages according to an ability of the learner. The hint information is extracted based on the predicted correct answer probability of the learner A with respect to the question j, or the ability value $\theta$ of the learner A and the degree of difficulty of the question j.

The hint timing deriver 114 derives a timing for presenting the hint information extracted by the hint extractor 113 to the learner A. An appropriate time of the timing is derived in such a way as to increase a learning effect for the learner. The timing is derived based on the predicted correct answer probability of the learner A with respect to the question j, or the ability value $\theta$ of the learner A and the degree of difficulty of the question j. The hint information selected based on the derived timing is transmitted from the communicator 13 to the learner terminal 30 via the network 20.

Next, the learner terminal 30 is described. An application program that executes processing related to learning is installed in the learner terminal 30. As illustrated in FIG. 3, the learner terminal 30 includes a processor 31, a storage 32, a display 33, a communicator 34, and a user interface 35. The processor 31 is constituted from, for example, a CPU and the like, and executes various types of processing by the application program stored in the storage 32.

The storage 32 includes, for example, a RAM, a ROM, and the like as at least one memory. The display 33 is constituted from a liquid crystal display (LCD), an electroluminescence (EL) display, and the like, and performs various types of display according to a display control signal output from the processor 31. The communicator 34 includes a communication module supporting a wireless LAN, mobile data communication, and the like, and performs data communication with the server 10 via the network 20. The user interface 35 accepts an operation input of the learner, or outputs an image or a sound output from the processor 31. The user interface 35 includes, for example, a touch screen and a speaker.

The processor 31 executes the application program related to learning stored in the storage 32, and thus functions as an input processor 311 and a display processor 312. The input processor 311 executes processing such as transmission of login information to the system, a request for a question, and transmission of an answer, based on an operation signal input from the user interface 35. The display processor 312 executes processing of acquiring the question information, the hint information, result information about determination of whether the answer is correct or incorrect, and the like that are transmitted from the server 10, and outputting the information to the display 33.

In response to a test being carried out, the learner terminal 30 acquires data about a set question from the server 10, and presents the question to the learner by displaying the question on the display 33. The learner terminal 30 acquires, from the server 10, the hint information about the question after a lapse of a predetermined time since the question display, and presents the question to the learner. In response to an answer to the question being input from the learner, the learner terminal 30 acquires a result of determination of whether the answer is correct or incorrect from the server 10, and presents the result to the learner.

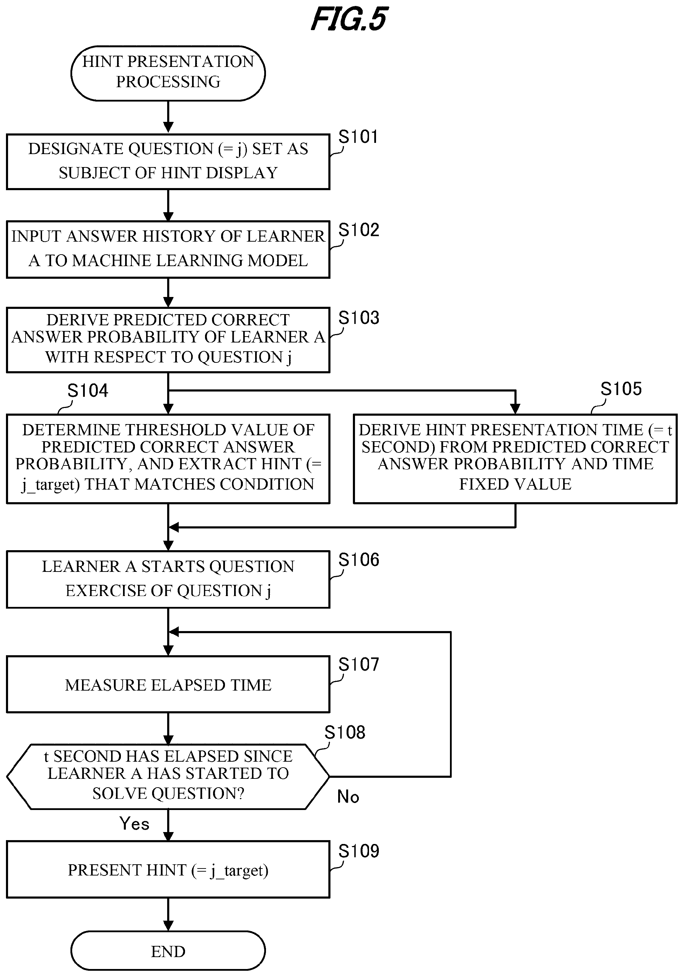

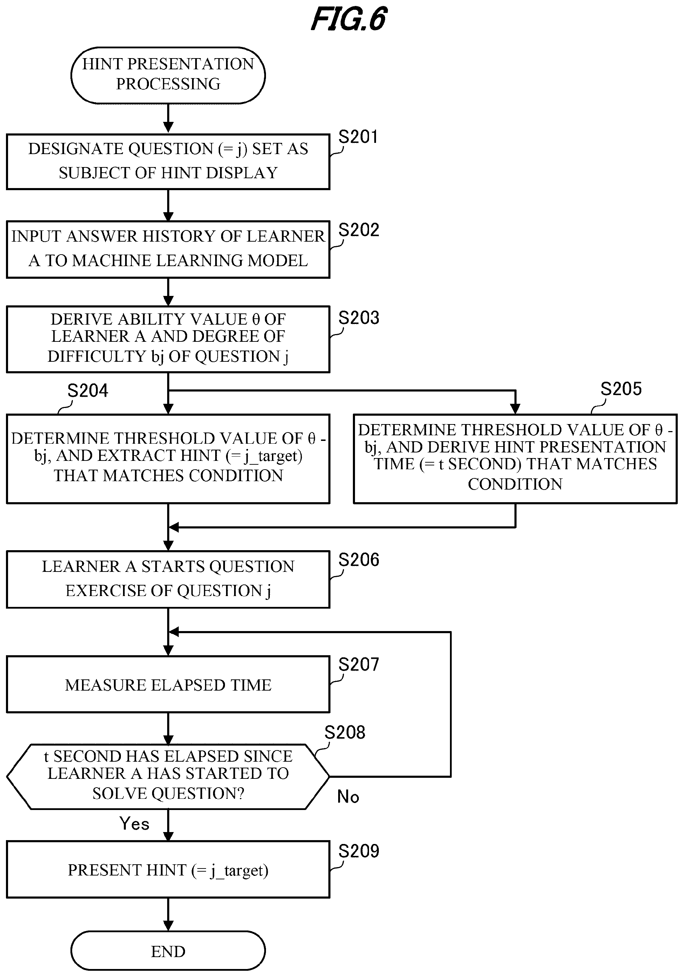

A processing operation of presenting hint information j_target about the question j set for the certain learner A in the information processing system 1 described above is described along flowcharts in FIGS. 5 and 6. FIG. 5 illustrates an example of controlling a timing for presenting the hint information, based on a predicted correct answer probability, and FIG. 6 illustrates an example of controlling a timing for presenting the hint information, based on a degree of difficulty of a question.

In FIG. 5, in response to the question extractor 111 of the processor 11 of the server 10 extracting the question j set for the learner A, and transmitting the question j to the learner terminal 30, the processor 11 designates, in the hint extractor 113, the question j set as a subject of hint information presentation (S101). The correct answer probability deriver 112 accesses the answer history information storage 123, reads an answer history of a question other than the question j of the learner A, and inputs the answer history to the machine learning model (S102). The correct answer probability deriver 112 derives a predicted correct answer probability, based on the read answer history of the learner A, and the machine learning model stored in the machine learning model storage 124 (S103). Note that the correct answer probability deriver 112 may derive a predicted incorrect answer probability, based on the read answer history of the learner A, and the machine learning model stored in the machine learning model storage 124. In response to the predicted incorrect answer probability being derived, control may be performed by replacing the predicted correct answer probability in the described flow with the predicted incorrect answer probability. The machine learning model is constructed based on answer histories of all questions of a plurality of learners. The IRT model described above is applied to construct the machine learning model.

The hint extractor 113 determines a threshold value of the derived predicted correct answer probability, and extracts the hint information j_target with respect to the question j that matches a condition (S104). A plurality of hints is provided according to levels. The levels are prepared in a plurality of stages from the simple one to the extent that a point for leading to a correct answer is indicated to the one having a detailed content almost close to an answer, and the levels are extracted according to the predicted correct answer probability.

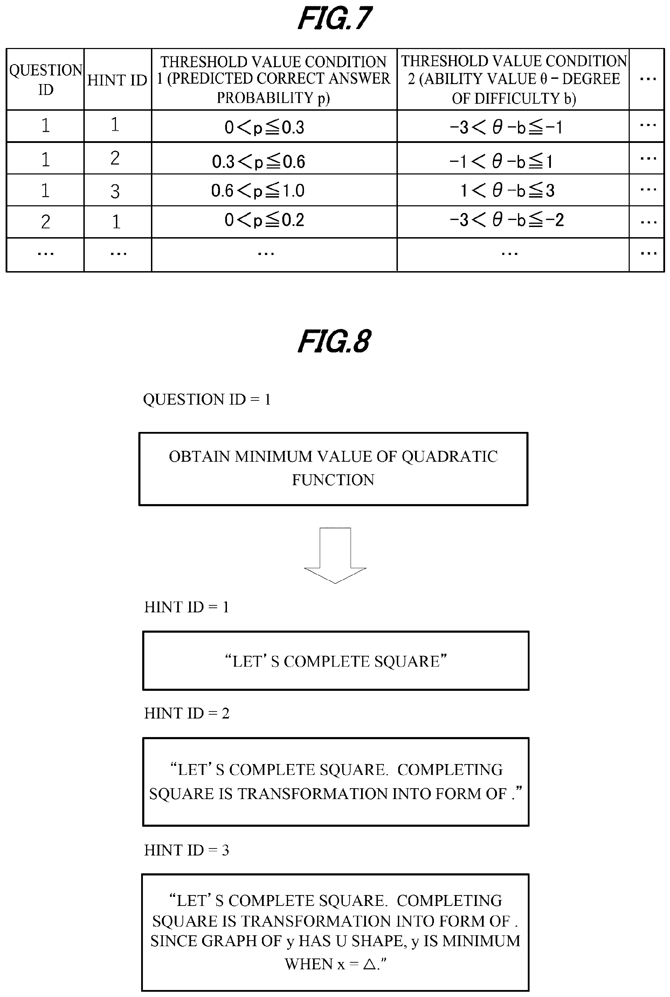

A threshold value for extracting the hint information is stored in a threshold value storage 125 of the storage 12. FIG. 7 illustrates an example of a table of threshold value conditions stored in the threshold value storage 125. An ID of a question, an ID of hint information with respect to the question, and a threshold value condition in which the hint information is extracted are stored in the table. In this example, three pieces of the hint information having hint IDs of 1 to 3 are provided for a question having an ID of 1.

FIG. 8 illustrates an example of the question having the question ID = 1 and the three pieces of hint information having the hint IDs = 1 to 3. "Obtain minimum value of quadratic function $y = 3x^2 - 12x + 9$" is assumed to be set as the question having the question ID = 1. Herein, a calculation question of mathematics is taken as an example. With respect to this question, the hint information having the hint ID = 1 is a sentence "Let's complete square.", and only simply indicates a point for obtaining the minimum value. In contrast, the hint information having the hint ID = 2 is a sentence "Let's complete square. Completing square is transformation into form of $y = \bigcirc(x - \triangle)^2 + \square$." The hint information having the hint ID = 2 is a content in which the sentence describing a meaning content of completing the square is added to the hint information having the hint ID = 1, and indicates a more detailed content than the hint information having the hint ID = 1. Furthermore, the hint information having the hint ID = 3 is acquired by adding a sentence "Since graph of y has U shape, y is minimum in a case where x = $\triangle$." to the sentence of the hint information having the hint ID = 2. The additional sentence described above describes a portion from which the minimum value is obtained in the equation completing the square, and indicates a more detailed content than the hint information having the hint ID = 2. In this way, the hint information has three stages having different levels of degrees of details, and the degrees of details increase in an order of the hint ID = 1 < the hint ID = 2 < the hint ID = 3. Note that the hint information described above increases the level of the degree of details of the hint information by adding the sentence of the hint information, which is not limited thereto. For example, for a calculation equation for leading to an answer described as the hint information, each time the level of the degree of details increases, a calculation process in the middle of equation transformation and the like may be increased, and a disclosed content of the calculation equation may be more detailed. Further, a point in answering may be preset by degree of importance, and an important point may be disclosed each time the level of the degree of details of the hint information increases. In this way, the hint information having a low degree of details is presented to a learner having a high possibility of leading to a correct answer, and the hint information having a high degree of details is presented to a learner having a low possibility of leading to a correct answer, and thus learning efficiency and a learning effect of the learner can be increased.

Returning to FIG. 7, two threshold value conditions are provided for each piece of the hint information in the table. A threshold value condition 1 indicates a threshold value condition for a predicted correct answer probability, and a threshold value condition 2 indicates a threshold value condition for a degree of difficulty. Herein, the threshold value condition 1 is described. The threshold value condition 2 is described below. In the threshold value condition 1, a different threshold value is set for each piece of the hint information. For example, a threshold value condition for a predicted correct answer probability p having the hint ID = 1 with respect to the question having the question ID = 1 is set as $0 < p \le 0.3$, a threshold value condition for the predicted correct answer probability p having the hint ID = 2 is set as $0.3 < p \le 0.6$, and a threshold value condition for the predicted correct answer probability p having the hint ID = 3 is set as $0.6 < p \le 1.0$. In other words, the hint information having the hint ID = 1 is extracted in a case of the predicted correct answer probability p of 30% or less, the hint information having the hint ID = 2 is extracted in a case of 30% to 60%, and the hint information having the hint ID = 3 is extracted in a case of 60% to 100%.

In parallel with extraction of the hint information, the hint timing deriver 114 derives a timing for presenting the extracted hint information to the learner A (S105). A time t being a time difference since the learner A starts to solve the question j by the question being displayed on the display 33 of the learner terminal 30 until the hint information is presented is derived by using the predicted correct answer probability. Specifically, a value acquired by multiplying a certain time fixed value by the predicted correct answer probability is set as a time until the hint information is presented. For example, in a case where the predicted correct answer probability is 40%, the time until the hint information is presented is 30 seconds × 0.4 = 12 seconds, and, in a case where the predicted correct answer probability is 10%, the time is 30 seconds × 0.1 = 3 seconds. Further, in a case where the predicted correct answer probability is equal to or more than a specific threshold value (for example, 80%), an ability of the learner may be determined to be sufficient to derive a correct answer without the hint information, and the processor 11 may perform control in such a way as not to display the hint information even after a time has elapsed.

In response to the question j being transmitted to the learner terminal 30 and presented to the learner A, the learner A starts a question exercise of the question j (S106). In response to the question exercise starting, the processor 11 measures an elapsed time since the start at any time (S107). The processor 11 determines whether the measurement time has passed the hint presentation time t derived by the hint timing deriver 114 since the learner A has started to solve the question j (S108). In a case where the measurement time does not pass the hint presentation time t (S108: No), the processor 11 returns to step S107 and continues the measurement operation until the measurement time passes the hint presentation time t. In a case where the measurement time passes the hint presentation time t (S108: Yes), the processor 11 transmits the extracted hint information j_target to the learner terminal 30, and presents the extracted hint information j_target to the learner A (S109), and the processing ends. As described above, by controlling a time for presenting the hint information according to the predicted correct answer probability, the hint information can be presented at an appropriate timing for the learner in a case where the learner solves a question, and learning efficiency and a learning effect of the learner can be increased. In other words, the server 10 according to the present disclosure contributes to an improvement of a computer function in such a way that information needed for solving a question can be presented to a user at an appropriate timing, which has not been conventionally performed. In other words, the server 10 can assist a user in a reliable manner in execution of a technical task (acquisition of information needed for solving a question at an appropriate timing) by an interaction process between the user and a machine.

Next, an example of controlling a timing for presenting the hint information, based on a degree of difficulty of a question, is described based on the flowchart in FIG. 6. Steps S201 to S202 are similar to steps S101 to S102 described above, and thus detailed description thereof is omitted.

The correct answer probability deriver 112 derives the ability value θ of the learner A and the degree of difficulty bj of the question j, based on the answer histories of all questions of all learners including the read answer history of the learner A, and the machine learning model (S203). Herein, the correct answer probability deriver 112 can derive a predicted correct answer probability of the question j by using the derived model parameter, but the predicted correct answer probability is not used herein, and thus derivation of the predicted correct answer probability is not performed. The hint extractor 113 determines a threshold value of a difference (θ - bj) between the derived ability value θ of the learner A and the degree of difficulty bj of the question j, and extracts the hint information j_target with respect to the question j that matches a condition (S204).

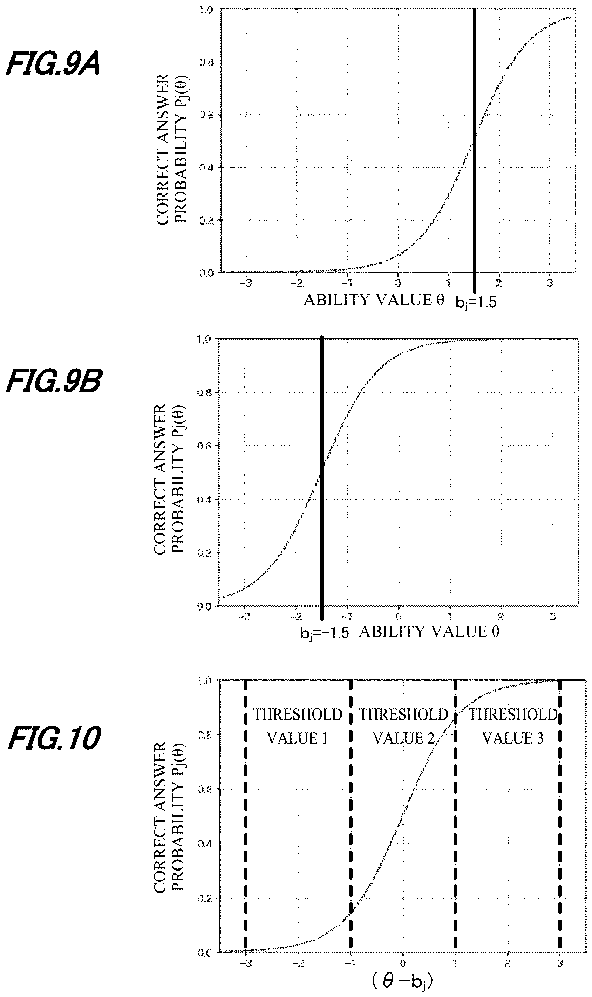

FIG. 9A and FIG. 9B illustrate an item characteristic curve indicating an analysis result by the IRT. FIG. 9A illustrates an example in a case where the degree of difficulty bj is high, herein, the degree of difficulty bj = 1.5, and FIG. 9B illustrates an example in a case where the degree of difficulty bj is low, herein, the degree of difficulty bj = -1.5. A horizontal axis indicates the ability value of the learner, and a vertical axis indicates a correct answer probability. The ability value $\theta$ needed for acquiring the same correct answer probability increases as the degree of difficulty bj increases. Conversely, the ability value $\theta$ needed for acquiring the same correct answer probability decreases as the degree of difficulty bj decreases. Particularly, in a case where $\theta$ is lower than bj, a correct answer probability of a question is low, it is difficult to correctly answer the question, and thus more support is conceivably needed. Thus, a threshold value of the difference ($\theta$ - bj) between the ability value $\theta$ of the learner and the degree of difficulty bj is determined, and the hint information that matches a condition is verified with the hint information storage 122 and presented to the learner.

FIG. 10 illustrates an item characteristic curve in response to the horizontal axis being set as ($\theta$ - bj), and also illustrates a threshold value condition of ($\theta$ - bj). Herein, threshold values 1 to 3 are assumed to be set as a threshold value. The threshold values 1 to 3 indicate the threshold value condition 2 in the threshold value table in FIG. 7. The threshold value 1 is a threshold value condition of ($\theta$ - bj) for presenting the hint information having the hint ID = 1 with respect to the question having the question ID = 1, and is set as $-3 < \theta - bj \leq -1$. The threshold value 2 is a threshold value condition of ($\theta$ - bj) for presenting the hint information having the hint ID = 2 with respect to the question having the question ID = 1, and is set as $-1 < \theta - bj \leq 1$. The threshold value 3 is a threshold value condition of ($\theta$ - bj) for presenting the hint information having the hint ID = 3 with respect to the question having the question ID = 1, and is set as $1 < \theta - bj \leq 3$. As described above, the degree of details of the hint information increases in the order of the hint ID = 1 < the hint ID = 2 < the hint ID = 3. The hint information having a low degree of details is presented to a learner having a high ability value with respect to a degree of difficulty, and a high possibility of leading to a correct answer, and the hint information having a high degree of details is presented to a learner having a low ability value with respect to a degree of difficulty, and a low possibility of leading to a correct answer, and thus learning efficiency and a learning effect of the learner can be increased.

In parallel with extraction of the hint information, the hint timing deriver 114 derives a timing for presenting the extracted hint information to the learner (S205). The time t since the learner A starts to solve the question j until the hint information is presented is derived by using the difference ($\theta$ - bj) between the ability value $\theta$ of the learner

and the degree of difficulty bj. For example, a time until the hint information is presented in a case where ($\theta$ - bj) is 0 is set as a certain time fixed value, and, in a case where ($\theta$ - bj) is smaller than 0, a value acquired by subtracting a value according to magnitude of ($\theta$ - bj) from the time fixed value is set as the hint presentation time. Further, in a case where ($\theta$ - bj) is greater than 0, a value acquired by adding a value according to magnitude of ($\theta$ - bj) to the time fixed value is set as the hint presentation time. Further, in a case where ($\theta$ - bj) is equal to or more than a specific threshold value, an ability of the learner may be determined to be sufficient to derive a correct answer without the hint information, and the processor 11 may perform control in such a way as not to display the hint information even after a time has elapsed.

Steps S206 to S209 of measuring an elapsed time since a start of a question exercise and presenting the extracted hint information are similar to steps S106 to S109 of the hint presentation processing based on the predicted correct answer probability in FIG. 5 described above, and thus detailed description thereof is omitted. As described above, by controlling a time for presenting the hint information according to the difference ($\theta$ - bj) between the ability value $\theta$ of the learner and the degree of difficulty bj, the hint information can be presented at an appropriate timing for the learner in response to the learner solving a question, and learning efficiency and a learning effect of the learner can be increased.

Note that the following modifications can be made in the hint presentation processing in FIGS. 5 and 6. In the example in FIG. 5, the threshold value of the predicted correct answer probability is determined in step S104, and the hint information according to the condition is extracted, but, instead of this, as in step S204 in FIG. 6, the hint information according to the condition may be extracted based on the ability value and the degree of difficulty being the model parameter. Conversely, as in step S 104 in FIG. 5, the hint information according to the condition may be extracted based on the predicted correct answer probability in step S204 in FIG. 6.

Further, in the hint presentation processing in FIGS. 5 and 6, the time until the hint information is presented is fixed to the time derived from the predicted correct answer probability or the difference between the ability value and the degree of difficulty, but the present disclosure is not limited to this, and the time may be changed according to a situation. For example, in a case where a question form requires an answer in a written manner, a time since a set question is presented until the hint information is presented is controlled based on an entry situation of the written answer of the learner with respect to the question. Herein, the written answer is an answer other than a selective answer selected from choices, and is an answer in which a sentence, a numerical expression, a chemical formula, and the like are described.

The processor 11 of the server 10 acquires, from the learner terminal 30 through the network 20, an answer of the learner input by a touch screen and the like with respect to a presented question. For an entry situation of the answer of the learner, the processor 11 measures a time since the question is presented until the answer of the learner is received from the learner terminal 30. In a case where the measurement time has passed a predetermined time that does not exceed the hint presentation time derived in step S 108 in FIG. 5 and step S208 in FIG. 6, the processor 11 checks whether the answer of the learner has been acquired from the learner terminal 30. In a case where the answer has not been acquired, that is, the answer has not been input even after the predetermined time has elapsed, the processor 11 performs control in such a way as to change the time for presenting the hint information to be shorter than the hint presentation time derived in step S108 and step S208. It is determined that the reason why the answer has not been transmitted is that the learner has not found a plan for solving the question yet, and thus, in this case, the processor 11 presents the hint information earlier. The learner can find a plan of the answer by viewing the hint information, and learning efficiency can be increased.

Further, in a case where the server 10 receives an answer of the learner within the predetermined time, but a degree of coincidence between the answer of the learner and a model answer falls below a predetermined proportion at the time of scoring, the server 10 determines that the answer of the learner is getting closer to an incorrect answer, and performs control in such a way as to change the time for presenting the hint information to be shorter than the hint presentation time derived in steps S108 and S208. In a case where the answer of the learner is determined to be getting closer to the incorrect answer, the answer of the learner can be led to a correct direction earlier by shortening the time until the hint information is presented, and learning efficiency of the learner is improved. On the other hand, in a case where the answer of the learner coincides with the model answer at the time of scoring of the acquired answer of the learner, the server 10 determines that the answer of the learner is getting closer to a correct answer, and performs control in such a way as to change the time for presenting the hint information to be longer than the hint presentation time derived in steps S108 and S208. In this way, in a case where an answer plan of the learner is determined to be correct, understanding of the learner is improved by increasing the time during which answering is allowed. Note that, instead of performing the control in such a way as to shorten the hint presentation time or in addition to this, in a case where there is the hint information having a higher degree of details than that of the hint information planned to be presented, the server 10 may perform control in such a way as to present the hint information having the higher degree of details.

The embodiment described above has the configuration in which the learner is connected to the server 10 from the learner terminal 30 via the network 20, and the server 10 transmits the hint information to the learner terminal 30, which is not limited thereto. A part or the whole of the processing executed by the server 10 may be executed by the learner terminal 30. In a case where the processor 31 of the learner terminal 30 executes processing of deriving a predicted correct answer probability, deriving a degree of difficulty, deriving an ability value, selecting the hint information, based on a predicted correct answer probability or a degree of difficulty, and the like, the learner terminal 30 corresponds to the "information processing device". In other words, the learner terminal 30 according to the present disclosure contributes to an improvement of a computer function in such a way that information needed for solving a question can be presented to a user at an appropriate timing, which has not been conventionally performed. In other words, the learner terminal 30 in the present embodiment can assist a user in a reliable manner in execution of a technical task (acquisition of information needed for solving a question at an appropriate timing) by an interaction process between the user and a machine.

Further, in the embodiment described above, the CPU executes the program stored in the storage 12, and thus functions as the processor 11. However, instead of executing the program stored in the storage 12 by the CPU, special-purpose hardware such as, for example, an application specific integrated circuit (ASIC), a field-programmable gate array (FPGA), and various control circuits may be included, and the special-purpose hardware may function as the processor 11. In this case, a part may be achieved by the special-purpose hardware, and the other part may be achieved by software or firmware.

Further, in the embodiment described above, the program may not only be stored in advance in the storage 12 as a non-transitory computer-readable storage medium, but may also be read and stored in the storage 12 from a computer-readable external recording medium (a compact disc (CD)-ROM, a digital versatile disc (DVD)-ROM, a memory card, a USB memory, and the like) via a recording medium reader, for example. In addition to this, the program can also be superimposed on a carrier wave, and read and stored in the storage 12 via a communication medium such as the Internet.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

**Claims**

1. An information processing device (10) comprising a processor (11) that executes

   first processing of deriving a predicted correct answer probability being a probability that a learner is predicted to correctly answer a first question, and deriving a time difference between a timing for displaying the first question and a timing for displaying hint information being information as a hint of the first question, based on the predicted correct answer probability, or second processing of acquiring a degree of difficulty of the first question answered by the learner, and deriving a time difference between a timing for displaying the first question and a timing for displaying the hint information, based on the degree of difficulty, and

   generates data for displaying the first question and the hint information for the learner, based on the time difference.

2. The information processing device (10) according to claim 1, wherein an answer history of a question other than the first question by the learner is acquired, and the predicted correct answer probability is derived based on the answer history.

3. The information processing device (10) according to claim 1 or 2, wherein

   an answer of the learner to the first question is a written answer, and the processor (11)

   further acquires an entry situation of an answer of the learner to the first question, and changes the time difference, based on the acquired entry situation.

4. The information processing device (10) according to claim 3, wherein the processor (11) changes the time difference to be shorter in a case where an answer is not input after a lapse of a predetermined time since control of display of the first question for the learner.

5. The information processing device (10) according to claim 3, wherein the processor (11)

   determines whether an acquired answer of the learner is getting closer to a correct answer or an incorrect answer, changes the time difference to be longer in a case where an answer of the learner is determined to be getting closer to a correct answer, and changes the time difference to be shorter in a case where an answer of the learner is determined to be getting closer to an incorrect answer.

6. The information processing device (10) according to claim 1 or 2, wherein the processor (11) performs control in such a way as not to display the hint information for the learner in a case where the predicted correct answer probability exceeds a predetermined threshold value.

7. The information processing device (10) according to claim 1, wherein the processor (11) performs control in such a way as not to display the hint information for the learner in a case where the degree of difficulty exceeds a predetermined threshold value.

8. An information processing system (1) comprising:

   the device (10) according to claim 1 including the processor that transmits the generated data; and a terminal device (30) that includes a display (33), receives the data from the device according to claim 1, and displays information on the display (33).

9. An information processing method executed by a computer (11) of an information processing device (10), the method comprising:

   executing

   first processing of deriving a predicted correct answer probability being a probability that a learner is predicted to correctly answer a first question, and deriving a time difference between a timing for displaying the first question and a timing for displaying hint information being information as a hint of the first question, based on the predicted correct answer probability, or second processing of acquiring a degree of difficulty of the first question answered by the learner, and deriving a time difference between a timing for displaying the first question and a timing for displaying the hint information, based on the degree of difficulty; and

   generating data for displaying the first question and the hint information for the learner, based on the time difference.

10. A program that causes a computer (11) provided in an information processing device (10) to

execute

first processing of deriving a predicted correct answer probability being a probability that a learner is predicted to correctly answer a first question, and deriving a time difference between a timing for displaying the first question and a timing for displaying hint information being information as a hint of the first question, based on the predicted correct answer probability, or

second processing of acquiring a degree of difficulty of the first question answered by the learner, and deriving a time difference between a timing for displaying the first question and a timing for displaying the hint information, based on the degree of difficulty, and

execute processing of generating data for displaying the first question and the hint information for the learner, based on the time difference.

# FIG.1

# FIG.2

## FIG.3

## FIG.4

| USER ID | QUESTION ID | QUESTION ANSWER DATE AND TIME | RESULT OF WHETHER ANSWER IS CORRECT OR INCORRECT |
|---------|-------------|-------------------------------|---------------------------------------------------|
| 1 | 1 | ○ YEAR/○ MONTH/○ DAY, ○ HOUR:○ MINUTE:○ SECOND | CORRECT |
| 1 | 2 | ... | INCORRECT |
| 1 | 3 | ... | INCORRECT |
| 2 | 1 | ... | CORRECT |
| ... | ... | ... | ... |

# FIG.5

HINT PRESENTATION
PROCESSING

S101
DESIGNATE QUESTION (= j) SET AS
SUBJECT OF HINT DISPLAY

S102
INPUT ANSWER HISTORY OF LEARNER
A TO MACHINE LEARNING MODEL

S103
DERIVE PREDICTED CORRECT
ANSWER PROBABILITY OF LEARNER A
WITH RESPECT TO QUESTION j

S104
DETERMINE THRESHOLD VALUE OF
PREDICTED CORRECT ANSWER
PROBABILITY, AND EXTRACT HINT (=
j_target) THAT MATCHES CONDITION

S105
DERIVE HINT PRESENTATION TIME (= t
SECOND) FROM PREDICTED CORRECT
ANSWER PROBABILITY AND TIME
FIXED VALUE

S106
LEARNER A STARTS QUESTION
EXERCISE OF QUESTION j

S107
MEASURE ELAPSED TIME

S108
t SECOND HAS ELAPSED SINCE
LEARNER A HAS STARTED TO
SOLVE QUESTION?

No

Yes

S109
PRESENT HINT (= j_target)

END

## FIG.6

```
          ┌──────────────────────────┐
          │   HINT PRESENTATION      │
          │      PROCESSING          │
          └──────────────────────────┘
                      │
                      ▼
     ┌──────────────────────────────────┐  S201
     │ DESIGNATE QUESTION (= j) SET AS   │
     │     SUBJECT OF HINT DISPLAY       │
     └──────────────────────────────────┘
                      │
                      ▼
     ┌──────────────────────────────────┐  S202
     │ INPUT ANSWER HISTORY OF LEARNER   │
     │   A TO MACHINE LEARNING MODEL     │
     └──────────────────────────────────┘
                      │
                      ▼
     ┌──────────────────────────────────┐  S203
     │     DERIVE ABILITY VALUE θ OF     │
     │   LEARNER A AND DEGREE OF         │
     │   DIFFICULTY bj OF QUESTION j     │
     └──────────────────────────────────┘
```

S204

S205

DETERMINE THRESHOLD VALUE OF θ - bj, AND EXTRACT HINT (= j_target) THAT MATCHES CONDITION

DETERMINE THRESHOLD VALUE OF θ - bj, AND DERIVE HINT PRESENTATION TIME (= t SECOND) THAT MATCHES CONDITION

S206

LEARNER A STARTS QUESTION EXERCISE OF QUESTION j

S207

MEASURE ELAPSED TIME

S208

t SECOND HAS ELAPSED SINCE LEARNER A HAS STARTED TO SOLVE QUESTION?

No

Yes

S209

PRESENT HINT (= j_target)

END

## FIG.7

| QUESTION ID | HINT ID | THRESHOLD VALUE CONDITION 1 (PREDICTED CORRECT ANSWER PROBABILITY p) | THRESHOLD VALUE CONDITION 2 (ABILITY VALUE θ − DEGREE OF DIFFICULTY b) | ⋯ |
|---|---|---|---|---|
| 1 | 1 | $0 < p \leqq 0.3$ | $-3 < \theta - b \leqq -1$ | ⋯ |
| 1 | 2 | $0.3 < p \leqq 0.6$ | $-1 < \theta - b \leqq 1$ | ⋯ |
| 1 | 3 | $0.6 < p \leqq 1.0$ | $1 < \theta - b \leqq 3$ | ⋯ |
| 2 | 1 | $0 < p \leqq 0.2$ | $-3 < \theta - b \leqq -2$ | ⋯ |
| ⋯ | ⋯ | ⋯ | ⋯ | ⋯ |

## FIG.8

QUESTION ID = 1

OBTAIN MINIMUM VALUE OF QUADRATIC FUNCTION

HINT ID = 1

"LET'S COMPLETE SQUARE"

HINT ID = 2

"LET'S COMPLETE SQUARE. COMPLETING SQUARE IS TRANSFORMATION INTO FORM OF ."

HINT ID = 3

"LET'S COMPLETE SQUARE. COMPLETING SQUARE IS TRANSFORMATION INTO FORM OF . SINCE GRAPH OF y HAS U SHAPE, y IS MINIMUM WHEN x = △."

*FIG.9A*

*FIG.9B*

*FIG.10*

# EUROPEAN SEARCH REPORT

**Application Number**

EP 25 19 0943

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/333400 A1 (SAINI SHIV KUMAR [IN] ET AL) 31 October 2019 (2019-10-31) | 1-4,6-10 | INV.<br>G06Q50/20 |
| Y | * paragraphs [0022], [0031] - paragraph [0033] * | 1,5 | G09B5/04<br>G09B5/06<br>G09B7/00 |
| Y | US 2005/221261 A1 (WEN SAYLING [TW] ET AL) 6 October 2005 (2005-10-06)<br>* paragraphs [0018], [0019] * | 1 | G09B7/04 |
| Y | US 2018/233058 A1 (ISOZU MASAAKI [JP] ET AL) 16 August 2018 (2018-08-16)<br>* paragraph [0087] * | 5 | |
| A | UENO MAOMI ET AL: "IRT-Based Adaptive Hints to Scaffold Learning in Programming",<br>IEEE TRANSACTIONS ON LEARNING TECHNOLOGIES, IEEE, USA,<br>vol. 11, no. 4,<br>1 October 2018 (2018-10-01), pages 415-428, XP011701082,<br>DOI: 10.1109/TLT.2017.2741960<br>[retrieved on 2018-12-19]<br>* formulae 1 - 8;<br>figures 1-4 * | 1-10 | |
| A | JP 2020 086075 A (TAMAI INVEST EDUCATIONS CO LTD) 4 June 2020 (2020-06-04)<br>* abstract; figure 1 * | 1-10 | |

**TECHNICAL FIELDS SEARCHED (IPC)**

G06Q
G09B

The present search report has been drawn up for all claims

| Place of search | Date of completion of the search | Examiner |
|---|---|---|
| Munich | 8 December 2025 | Liendl, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 0943

08-12-2025

| Patent document cited in search report | Publication date | Patent family member(s) | | Publication date |
|---|---|---|---|---|
| US 2019333400 A1 | 31-10-2019 | NONE | | |
| US 2005221261 A1 | 06-10-2005 | NONE | | |
| US 2018233058 A1 | 16-08-2018 | CN | 108140329 A | 08-06-2018 |
| | | JP | 6794992 B2 | 02-12-2020 |
| | | JP | WO2017064890 A1 | 02-08-2018 |
| | | US | 2018233058 A1 | 16-08-2018 |
| | | WO | 2017064890 A1 | 20-04-2017 |
| JP 2020086075 A | 04-06-2020 | JP | 7022431 B2 | 18-02-2022 |
| | | JP | 2020086075 A | 04-06-2020 |

**EP 4 693 161 A1**

**Patent documents cited in the description**

- JP 7022431 B